# FASCICULE DE BREVET EUROPEEN

(11) **EP 3 549 190 B1**
(45) Date de publication et mention de la délivrance du brevet: **06.07.2022**
(21) Numéro de dépôt: 16831505.9
(22) Date de dépôt: 22.12.2016
(51) Int. Cl.: H01M 6/52, H01M 10/54, C21B 13/08, C21C 5/06, C21C 7/076, F27D 17/00, C21C 5/40, F27B 7/36

(54) **PROCÉDÉ DE FUSION DE PILES ET ACCUMULATEURS PORTABLES USAGÉS ET UTILISATION D'UNE INSTALLATION POUR LA MISE EN OEUVRE DU PROCÉDÉ**
VERFAHREN ZUM SCHMELZEN VON GEBRAUCHTEN TRAGBAREN AKKUMULATOREN UND BATTERIEN SOWIE VERWENDUNG EINER ANLAGE ZUR DURCHFÜHRUNG DES VERFAHRENS
METHOD FOR MELTING USED PORTABLE ACCUMULATORS AND BATTERIES, AND USE OF A FACILITY FOR IMPLEMENTING THE METHOD

(30) Priorité: 29.11.2016 FR 1661663
(43) Date de publication de la demande: 09.10.2019
(73) Titulaire: ECO'RING, 42110 Feurs (FR)
(72) Inventeur: SOKOLOFF, Bruno, 69110 Sainte-Foy-Les-Lyon (FR)
(74) Mandataire: Lefevre-Groboillot, David André
(86) Numéro de dépôt international: PCT/FR2016/053652
(87) Numéro de publication internationale: WO 2018/100254

(56) Documents cités:
- EP-A1- 2 687 613
- EP-A1- 2 687 614
- BE-A- 560 723
- FR-A- 1 377 329
- FR-A- 1 377 329
- US-B2- 9 005 570
- , 11 November 2020 (2020-11-11), Retrieved from the Internet: URL:https://fr.wikipedia.org/wiki/Proc%C3% A9d%C3%A9_Kaldo [retrieved on 2021-01-18]

## Description

L'invention concerne un procédé de fusion de piles usagées de type portables et à électrolyte salin ou alcalin ou Zinc-Air et des accumulateurs de type portables et de couple électrochimiques NiMH (nickel métal-hydrure) et NiCd (Nickel Cadmium) et une installation pour la mise en oeuvre de ce procédé.

En Europe, chaque année, plus de 220.000 tonnes de piles et accumulateurs sont mises sur le marché, dont 160.000 tonnes de piles alcalines et salines. En 2012, 70.000 tonnes de piles et accumulateurs portables ont été collectés afin d'être recyclés. Les flux collectés sont principalement constitués de piles salines, alcalines et Zinc-Air, mais aussi d'accumulateurs NiMH (environ 1.000 tonnes/an) et NiCd, de l'ordre de 6.000 tonnes/an.

Concernant le flux principal des piles salines, alcalines, auxquelles on peut rattacher les accus NiMH, la filière prépondérante de recyclage est la voie mécanique et pyro-métallurgique. Les piles sont broyées, puis une séparation magnétique isole la fraction métallique, c'est-à-dire les boîtiers des piles, du reste, à savoir une pate dite « black-mass » à cause de sa couleur noire, riche en manganèse, zinc, cuivre, nickel et carbone. La fraction métallique est valorisée comme « ferraille » par fusion en aciérie, tandis que la pâte « black-mass » est chargée principalement dans des fours Waelz dédiés à l'enrichissement des poussières riches en zinc. Cette filière valorise donc le zinc contenu, mais pas les éléments manganèse, cuivre, nickel, qui sont perdus en tant que métal dans une scorie mise en décharge et utilisée en remblayage. Cette filière fait débat compte tenu, d'une part, de son faible taux de recyclage et, d'autre part, de la toxicité des éléments scorifiés, à savoir MnO2 qui est neurotoxique et mutagène pour l'homme et le NiO réputé cancérigène. D'autres solutions pyro-métallurgiques ont été utilisées, mais elles font appel à des technologies de four sophistiquées et/ou chères en investissement comme les fours électriques. Un procédé utilisant un four électrique est décrit dans EP2687613. EP2687614 décrit un four utilisant un brûleur oxy-gaz.

L'invention a pour but de proposer un procédé et un dispositif permettant de valoriser les piles alcalines, salines, zinc-air et accumulateurs NiMH et NiCd, qui ne présentent pas les inconvénients susmentionnés.

Pour atteindre ce but, le procédé de fusion selon l'invention est caractérisé en ce que les piles ou accumulateurs usagés sont chargés dans un réacteur dans lequel on a préalablement établi un bain de métal liquide à base de fer et, au-dessus du bain, une couche de laitier, et en ce que l'on utilise cette couche de laitier comme tampon pour éviter le contact direct des piles ou accumulateurs avec le métal liquide et comme vecteur de transfert thermique ainsi que de milieu de réduction des oxydes métalliques contenus dans les piles et accumulateurs.

Une méthode et une utilisation selon l'invention sont définies dans les revendications de cette demande.

Selon une caractéristique de l'invention, le procédé est caractérisé en ce que l'on créé un pied de bain de métal 3 en fondant des pièces métalliques en fonte ou en ferrailles ou en ferromanganèse en un ferro-alliage du type ferro-manganèse carburé FeMnC.

Selon une autre caractéristique de l'invention, le procédé est caractérisé en ce que l'on créé au-dessus du pied de bain 3 une couche de laitier d'une épaisseur d'au moins 15 cm, de préférence de l'ordre de 20 à 30 cm, de constituants principaux CaO-SiO2-Al2O3.

Selon une autre caractéristique de l'invention, le procédé est caractérisé en ce que l'on charge les piles, la black-mass ou les accumulateurs dans la couche de laitier par gravité.

Selon une autre caractéristique de l'invention, le procédé est caractérisé en ce que les constituants volatils tels que de l'eau ou les plastiques ou les papiers et cartons ou les goudrons ou les sels métalliques volatils des piles ou accumulateurs sont gazéifiés dans la couche de laitier.

Selon une autre caractéristique de l'invention, le procédé est caractérisé en ce que la fusion réductrice des constituants Fe, Mn, Ni, Co et Zn se déroulent dans la couche de laitier,

Selon une autre caractéristique de l'invention, le procédé selon l'une des revendications 1 à 6, caractérisé en ce que, pour assurer la fusion des piles, de la black-mass ou des accumulateurs dans le réacteur de fusion, on pratique avec le chargement un apport complémentaire d'oxygène de sorte que soit établi et maintenu une température du bain métal-couche de laitier de l'ordre de 1.400°C.

Selon une autre caractéristique de l'invention, le procédé est caractérisé en ce que l'ensemble formé par le bain de métal 3 et de la couche de laitier est brassé par rotation de la cuve du réacteur ou par injection de gaz.

Selon une autre caractéristique de l'invention, le procédé est caractérisé en ce que l'apport de carbone complémentaire sous forme de charbon, de coke métallurgique ou de carbone de récupération représente 10 à 20% du débit de chargement de piles, de black-mass ou des accumulateurs.

Selon une autre caractéristique de l'invention, le procédé selon l'une des revendications 1 à 9, caractérisé en ce qu'il comporte des périodes prédéterminées de coulée de laitier et de métal liquide, et en ce que le chargement des piles, de la black-mass ou des accumulateurs est effectué de façon semi-continue entre les périodes de coulée.

L'installation de fusion pour la mise en oeuvre du procédé est caractérisée en ce qu'elle comprend un réacteur de fusion 1 et un système de traitement des gaz produits dans le réacteur lors de la fusion, qui comporte montée en série, une chambre de postcombustion 30 des gaz, un dispositif 35 de refroidissement des gaz et un filtre à manches 38.

Selon une caractéristique de l'invention, l'installation est caractérisée en ce que le réacteur comprend une cuve avec réfractaires 15, qui est pourvue d'un dispositif 17 d'entraînement en rotation de la cuve autour de son axe longitudinal et qui est susceptible de pivoter autour d'un axe horizontal 26 entre une position avantageusement inclinée de fusion et des positions de coulée du métal liquide et du laitier.

Selon une autre caractéristique de l'invention, l'installation selon la revendication 12, caractérisée en ce qu'elle comprend une hotte 22 de sortie des gaz en 24 et un dispositif injecteur-brûleur 7 et une goulotte de chargement 11, qui traversent la hotte.

Selon une autre caractéristique de l'invention, l'installation comprend des brûleurs oxy-gaz, oxy fuel ou oxy-carbone.

L'invention sera mieux comprise, et d'autres buts, caractéristiques, détails et avantages de celle-ci apparaîtront plus clairement dans la description explicative qui va suivre faite en référence aux dessins annexés donnés uniquement à titre d'exemple illustrant un seul mode de réalisation de l'invention et dans lesquels :
- Les figures 1A et 1B sont des vues schématiques qui illustrent deux étapes du procédé de fusion de piles ou accumulateurs selon l'invention ;
- la figure 2 est une vue synoptique du procédé de fusion selon l'invention et ;
- la figure 3 est une vue latérale d'un réacteur de fusion de piles ou accumulateurs selon l'invention.

L'invention concerne un procédé et un système de fusion de piles et/ou accumulateurs usagés ou de matière extraite telle la black-mass, dans un four de fusion à énergie fossile, à savoir, carbone, gaz ou fuel. La composition moyenne des piles est approximativement de 20% de Mn, 20% de Fer, 10% de Carbone, 20% de Zinc, 1,2% de Cu, 0,2% de Ni, quelques centaines de ppm d'étain, 3-5% de K, 2-3% de Cl, le reste étant constitué de H2O, oxygène et composés organiques volatils. La composition moyenne des accumulateurs NiMH est de 18% au moins de Ni, 1% de Co, 15% au moins de Fe, 4% au moins de terre rare, le reste étant constitué de H2O, et composés organiques volatiles.

A titre d'exemple, les accumulateurs du type NiMH pourraient comprendre 24% Ni, 2% Co, 20% Fe et 6% de terres rares du type « mischmetal » (le mélange type mischmetal comporte généralement environ 50% La (Lanthane), environ 25% Ce (Cerium) et un solde à 100% réparti entre les éléments de terres rares Nd et Pr. La composition chimique moyenne des accumulateurs NiCd est de 16% au moins de Ni, 1% au moins de Co, 15% au moins de Fe, 8% au moins de Cd, le reste étant constitué de H2O, oxygène et composés organiques volatils. A titre d'exemple, les accumulateurs pourraient contenir 20% Ni, 2% Co, 20% Fe et 10% Cd.

Grâce au procédé et au système qui seront décrits ci-après, l'invention permet de valoriser les piles alcalines, salines, zinc-air et les accumulateurs NiMH et NiCd, par un procédé dans lequel l'énergie est apportée par du gaz ou du fuel et du carbone, dont le carbone des piles, et qui ne nécessite pas de pré-traitement des piles et accumulateurs usagés.

Comme le montrent les figures, l'invention propose à cet effet un procédé de fusion des piles dans un réacteur 1 contenant un bain de métal liquide 3 à base de fer tel que de la fonte ou du ferro-alliage carburé du type ferro-manganèse, qui est surmonté d'une couche épaisse de laitier 5. Ce laitier fait office à la fois de « tampon » évitant le contact direct des piles ou accumulateurs chargés, avec le métal liquide du bain 3, et de réacteur de transferts thermiques et de réactions chimiques de type oxydo-réduction dans lequel est développée l'énergie du carbone et une énergie fossile d'appoint telle que du gaz ou du fuel. La réduction des composés zincifères engendrera une sublimation du Zn sous forme de vapeur à sa sortie de la couche de laitier et que cette vapeur de Zn se transformera sous forme d'oxyde de Zinc dès que les fumées seront oxydantes, au plus tard après la chambre de postcombustion.

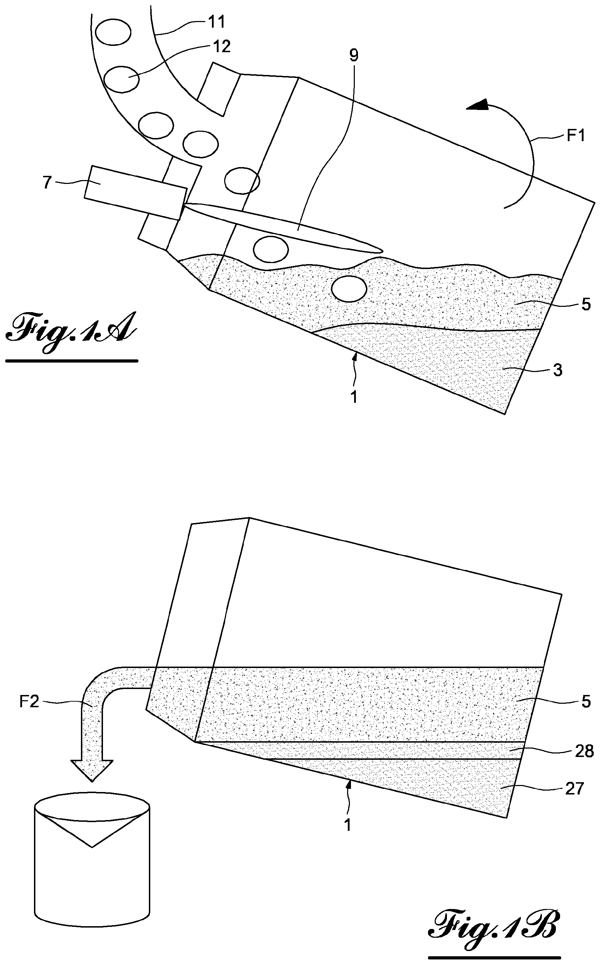

Le réacteur de fusion est, comme cela est représenté sur les figures, de préférence une cuve cylindrique équipée d'un injecteur 7 d'oxygène ou d'air enrichi en oxygène et d'un brûleur d'appoint au gaz et au fuel. L'injecteur et le brûleur peuvent être combinés comme cela est le cas sur les figures 1A et 1B. La référence 9 désigne la flamme du brûleur.

Le chargement des piles ou accumulateurs et des additifs se fait par la goulotte de chargement 11. Les piles ou accumulateurs sont indiqués en 12.

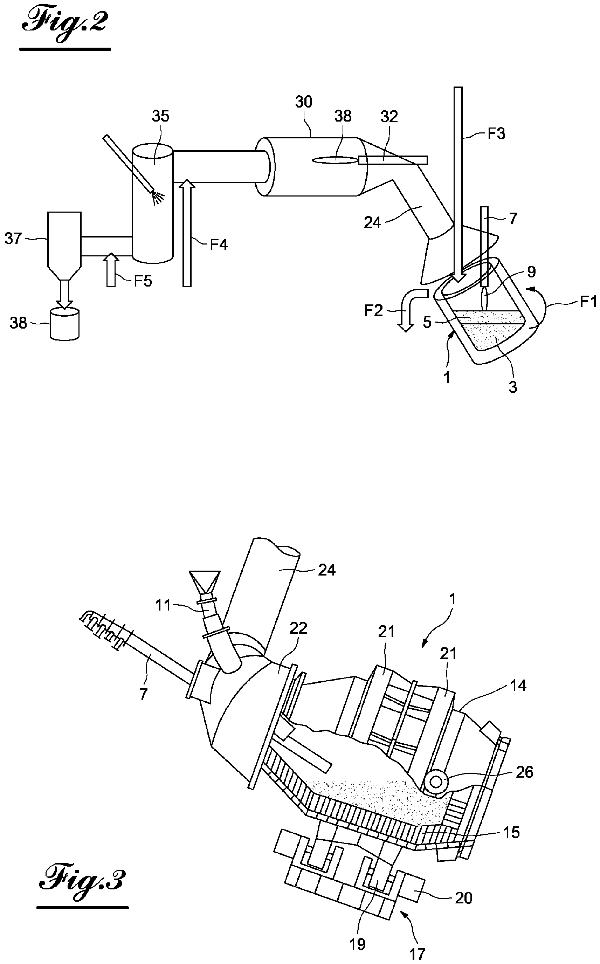

La figure 3 montre une version de réalisation d'un réacteur selon l'invention. Comme indiqué plus haut, le réacteur comprend une cuve principalement cylindrique F4 revêtue de réfractaire indiqué en 15 et utilisée en position de fusion inclinée. La cuve est entraînée en rotation par un dispositif d'entraînement 17 comprenant des galets 19 mus par un moteur électrique 20 et roulant sur des pistes annulaires 21. La cuve est fermée en haut par une hotte 23 qui capte les gaz du procédé produits par les réactions chimiques et thermodynamiques qui sortent par une conduite 24. La hotte est traversée par l'injecteur-brûleur 7 et par la goulotte 11 de chargement des matières 12. La cuve est susceptible de pivoter autour de l'axe horizontal 26 entre sa position de fusion montrée à la figure 1A dans laquelle la cuve tourne autour de son axe longitudinal comme cela est indiqué par la flèche F2, et dans sa position de coulée du laitier de la figure 1B puis de la coulée du métal liquide (non représentée). La coulée est symbolisée par la flèche F2.

La coulée de laitier a lieu, par exemple, toutes les 2 à 4 heures lors d'un arrêt de 10 à 15 minutes avec une coulée du laitier durant 5 à 7 minutes. La coulée du métal est effectuée par exemple toutes les 8 heures, en utilisant cependant un dispositif de retenue d'une couche tampon de laitier et en conservant un bain de métal liquide pour la fusion du prochain chargement de matière à fondre. Cette réserve de métal liquide est indiquée sur la figure 1B en 27 tandis que le métal supplémentaire qui a été produit entre deux coulées de laitier est indiqué en 28.

Une caractéristique essentielle à la bonne marche du procédé selon l'invention, outre la présence d'un laitier épais 5, est un brassage énergique du bain de métal 3, assurant un excellent échange entre le métal et le laitier. Ce brassage peut être obtenu de deux manières, soit par un brassage pneumatique en fond de cuve, c'est-à-dire par injection continue d'un gaz neutre, par exemple de l'azote, soit par la rotation de la cuve, de préférence en position inclinée, comme le montrent les figures.

En se référant à la figure 3, on décrira ci-après, à titre d'exemple non limitatif, et en se référant à la figure 2, une installation de fusion de piles et accumulateurs usagés et le procédé de fusion proposé par l'invention.

Comme le montre la figure 3, les gaz qui sortent de la cuve 1 par la conduite de sortie 24 parviennent tout d'abord dans une chambre de postcombustion 30 de température de travail d'au moins 800°C dans laquelle une lance 32 introduit une certaine quantité de gaz dont la flamme est indiquée en 33. Les gaz qui sortent de la chambre 30 sont soumis à un refroidissement à moins de 300°C dans un dispositif de refroidissement par eau ou un échangeur d'air 35. Après le passage par un filtre à manches 37, les gaz sortent de l'installation. Les poussières sont recueillies en 38.

On donnerait ci-après les chiffres de débit typique pour la fusion dans cette installation de piles usagées d'une quantité de 0,75 t/h. Ces piles d'une composition de 20% Fe, 28% de Mn, 5% C et 18% Zn sont introduites dans le réacteur 1 avec une quantité de 0,1-0,15 t/h d'anthracite, et de l'ordre de 50 kg de mélange chaux-silice-alumine. La flèche F3 symbolise cette introduction des piles et de l'anthracite. Pour la fusion des piles, on injecte par l'injecteur-brûleur 7, 60 à 100 Nm³/h de gaz et de 300 à 360 Nm³/h d'oxygène. On obtient alors 0,35 t/h du métal Fe Mn 55 C3 et 0,13 t/h de laitier.

Pour la postcombustion dans la chambre de postcombustion 30, qui sort du réacteur 1, on injecte dans cette chambre une quantité de 0 à 20 Nm³/h de gaz. Dans la chambre de postcombustion et entre le dispositif de refroidissement 35 et le filtre à manches 37, on introduit de l'air de dilution dans l'écoulement des fumées, comme cela est indiqué par les flèches F4 et F5 et/ou des fines gouttelettes d'eau (« spray ») comme indiqué en 35 afin de maitriser une température de gaz inférieure à 300°C pour la filtration. Le filtre à manches d'une capacité de 10-15.000 Nm³/h permet de retenir une quantité de poussières de 0,3 t/h à 50% Zn.

On donnera ci-après les chiffres de débit typiques pour une fusion de black-mass d'une quantité de 0,5 t/h ayant la composition suivante : 30% Mn, 20% C, 20% Zn. Cette quantité de black-mass est introduite dans le réacteur avec 50 à 100 kg/h d'anthracite et un liant à base CaO. Cette matière est introduite dans la cuve sous forme de granulés appelés pellets. Pour la fusion, on injecte dans le réacteur une quantité de 60-100 Nm³/h gaz, et de 300 à 400 Nm³/h d'oxygène, ce qui permet d'obtenir 0,18 t/h de métal Fe Mn, 75 C3 et 0,1 t/h de laitier.

Pour les accumulateurs de type NiMH, comprenant 23 à 27% Ni, environ 20% Fe, on procédera en campagnes séparées, afin d'obtenir une meilleure récupération et valorisation des métaux de grande valeur contenus (Ni, Co, et terres rares). Dans ce cas, on formera comme pied de bain un ferro-nickel de composition approximative FeNi45 avec 3 à 4%C, avec ou sans Co. En effet, à partir de 1 t d'accumulateurs NiMH et les ajouts de carbone et de chaux nécessaires on obtiendra près de 0,5 t de ferro-nickel de type FeNi45, comprenant environ 6% Co et 3%C. et environ 125 kg de laitier comprenant environ 45% de terres rares de proportion du « mischmetal » (mentionnée précédemment), le reste du laitier étant constitué des agents de laitier, principalement de la chaux. Pour les accumulateurs type NiMH, on obtiendra très peu de poussière, de l'ordre de 20 kg/t.

Concernant les accumulateurs NiCd de composition type 20%Ni 2%Co 20%Fe 10%Cd et 5%KOH, on les traitera également en campagnes séparées, et on commencera sur un pied de bain de ferro-nickel type FeNi50, et un laitier base chaux-silice. A partir d'1 t d'accu NiCd et les ajouts d'anthracite et de chaux (environ 100 kg) on obtiendra 0,4 t de métal FeNi50 contenant 5%Co, environ 150 kg de laitier, et 150 à 200 kg de poussière très principalement composée d'oxyde CdO.

Comme indiqué plus haut, conformément à l'invention, au début d'une campagne de fusion, on produit, avant l'introduction des piles ou accumulateurs à fondre dans le réacteur, un pied de bain de fonte 3 ou de ferro-manganèse, de l'ordre de 3 à 4 tonnes, par fusion au brûleur oxy-gaz de petits blocs de métal.

Le bain de métal est porté à une température de 1400-1450° C. A la fin de la fusion du pied de bain de métal, on forme la couche de laitier épaisse, par exemple, de plus de 15 cm, de préférence de 25 cm, à base de chaux-alumine-silice, ce qui représente un apport de 0,8 à 1 t de mélange et on ajuste la température au niveau de température souhaitée de l'ordre de 1.400-1.450°C.

La formation du laitier est réalisée par un apport conjoint de 3 composés, à savoir de la chaux, de la silice (SiO2) et alumine (Al2O3) en proportions choisies telles que le point de fusion du mélange soit très inférieur à 1.400°C. Par exemple, on choisit en proportion CaO/SiO2/Al2O3 de 40/40/20 dont la température de fusion est de l'ordre de 1.300°C.

Etant donné que la chaux et l'alumine pure sont coûteuses, on utilisera avantageusement un laitier de récupération, du type laitier de poche d'aciérie, auquel on ajoutera du sable siliceux, par exemple issu de déchets de fonderies de moulage au sable et contenant par exemple des phénols pour réaliser les proportions visées. Le chargement des piles à la fusion commence lorsqu'est constitué et réglé en température le pied de bain métal-laitier.

Comme cela ressort de la description qui précède, l'objectif de la fusion est de fabriquer, dans le cas des piles, un métal type ferro-manganèse de 35% à 75% de Mn contenu, avec de 1% à 5% de carbone et un oxyde de Zinc à plus de 40% de Zn contenu ;

Dans le cas des accumulateurs NiMH, un métal type ferro-nickel contenant environ 45% de Ni, de 1% à 6% de Co et un laitier contenant de 40% à 50 % de terres rares type La, Ce, Nd provenant du « mischmetal » des accumulateurs NiMH ;

Dans le cas des accumulateurs NiCd, un ferro-nickel contenant environ 50% de Ni, de 1 à 6% de Co, un laitier constitué de CaO/SiO2 et des poussières contenant de l'ordre de 50% d'oxyde de Cadmium.

L'énergie nécessaire pour la fusion du pied de bain est fournie par un brûleur oxy-gaz ou oxy-fuel ou oxy-carbone typiquement réglé pour l'oxy-gaz de 50 à 100 Nm3 gaz naturel/h, soit de 0,5 à 1 MW de puissance. Le ratio oxygène / gaz est réglé à la stoechiométrie ou en excès d'oxygène, c'est-à-dire proche de 2 à 2.5 m³ oxygène par m³ gaz.

Les piles sont ensuite chargées en mode semi-continu, en même temps qu'un apport de noix d'anthracite, de coke métallurgique ou de carbone de récupération de 10 à 20% du débit de piles, suivant la quantité de carbone contenue dans les piles.

Le carbone des piles et celui de l'anthracite ou coke ou carbone de récupération réduit l'oxyde de manganèse et forme du gaz CO/CO2 qui sort du bain, et qu'on brûle par un apport d'oxygène complémentaire, suivant un ratio de l'ordre de 1,5 m³ d'oxygène / kg C. L'impulsion du ou des jets d'oxygène est réglée de sorte que la flamme pénètre bien le laitier, mais sans impacter directement le bain métal.

Les gaz CO/CO2 , de combustion ou d'évaporation des composés volatils tels l'eau, les papiers-cartons, les goudrons, certains sels métalliques et le Zn vapeur issus des réactions de l'interface métal / laitier et des réactions chimiques et thermodynamiques d'oxydo-réduction font mousser le laitier et le brasse au-delà du brassage résultant de la rotation de la cuve, ce qui le rend très apte à absorber la chaleur développée par le brûleur oxygaz et le rayonnement des flammes CO/oxygène.

Le brûleur oxy-gaz ou oxy-fuel ou oxy-carbone est maintenu entre 50 et 100% de sa puissance nominale, et il est réglé de sorte à maintenir la température du bain.

Une phase semi-continue de fusion dure de l'ordre de 3 à 4 heures, au bout desquelles on coule du four la quantité de laitier formée, tout en conservant au four un laitier épais, puis on reprend la fusion. Après 2 phases, soit 8 heures, on pourra couler aussi bien le laitier que le métal formé durant ces 8 heures, mais en conservant le pied de bain initial.

## Revendications

1. Procédé de fusion par bruleur oxy-gaz ou oxy-fuel ou oxy-carbone de piles usagées du type alcaline, saline, ou zinc-air ou d'accumulateurs des types NiCd ou NiMH ou de black-mass, **caractérisé en ce que** les piles, accumulateurs usagés ou la black-mass sont chargés dans un réacteur de fusion (1) dans lequel on a préalablement établi un bain de métal liquide (3) à base de fer et, au-dessus du bain, une couche de laitier (5), et **en ce que** l'on utilise cette couche de laitier comme tampon pour éviter le contact direct des piles ou accumulateurs avec le métal liquide du bain (3) et comme vecteur de transfert thermique ainsi que comme milieu de réduction des oxydes métalliques contenus dans les piles et accumulateurs et la black-mass.

2. Procédé selon la revendication 1, **caractérisé en ce que** l'on créé un pied de bain de métal (3) en fondant des pièces en fonte ou en ferrailles ou en ferro-alliage du type ferro-manganèse carburé FeMnC.

3. Procédé selon l'une des revendications 1 ou 2, **caractérisé en ce que** l'on créé au-dessus du pied de bain (3) une couche de laitier (5) d'une épaisseur d'au moins 15 cm, de préférence de l'ordre de 20 à 30 cm, de constituants principaux CaO-SiO2-Al2O3.

4. Procédé selon l'une des revendications 1 à 3, **caractérisé en ce que** l'on charge les piles, la black-mass ou les accumulateurs dans la couche de laitier.

5. Procédé selon la revendication 4, **caractérisé en ce que** les constituants volatils tels que de l'eau ou les plastiques ou les papiers-cartons ou les goudrons ou les sels métalliques et le Zn, des piles ou accumulateurs sont gazéifiés dans la couche de laitier et renforcent son moussage améliorant l'efficacité du transfert thermique de la flamme au bain.

6. Procédé selon la revendication 4, **caractérisé en ce que** la fusion réductrice des constituants Fe, Mn, Ni , Co et Zn se déroulent dans la couche de laitier.

7. Procédé selon l'une des revendications 1 à 6, **caractérisé en ce que**, pour assurer la fusion des piles, de la black-mass ou des accumulateurs dans le réacteur de fusion, on pratique avec le chargement un apport complémentaire d'oxygène de sorte que soit établi et maintenu une température du bain métal-couche de laitier de l'ordre de 1.400°C.

8. Procédé selon l'une des revendications 1 à 7, **caractérisé en ce que** l'ensemble formé par le bain de métal (3) et de la couche de laitier (5) est brassé par rotation de la cuve du réacteur ou par injection de gaz.

9. Procédé selon l'une des revendications 6 à 8, **caractérisé en ce que** l'apport de carbone complémentaire sous forme de charbon ou de coke ou de carbone de récupération présente 10 à 20% du débit de chargement de piles, de black-mass ou des accumulateurs.

10. Procédé selon l'une des revendications 1 à 9, **caractérisé en ce qu'**il comporte des périodes prédéterminées de coulée de laitier et de métal liquide, et **en ce que** le chargement des piles, de la black-mass ou des accumulateurs est effectué de façon semi-continue entre les périodes de coulée.

11. Utilisation d'une installation de fusion pour la mise en œuvre du procédé selon l'une des revendications 1 à 10, **caractérisée en ce que** l'installation comprend un réacteur de fusion 1 comportant un bain de métal liquide (3) et au-dessus du bain une couche de laitier, (5) et un système de traitement des gaz produits dans le réacteur lors de la fusion, qui comporte montée en série, une chambre de postcombustion (30) des gaz, un dispositif (35) de refroidissement des gaz et un filtre à manches (38).

12. Utilisation selon la revendication 11, **caractérisée en ce que** le réacteur comprend une cuve à réfractaire (15), qui est pourvue d'un dispositif (17) d'entraînement en rotation de la cuve autour de son axe longitudinal et qui est susceptible de pivoter autour d'un axe horizontal (26) entre une position avantageusement inclinée de fusion et des positions de coulée du métal liquide et du laitier.

13. Utilisation selon la revendication 12, **caractérisée en ce que** l'installation comprend une hotte (22) de sortie des gaz (en 24) et un dispositif injecteur-brûleur (7) et une goulotte de chargement (11), qui traversent la hotte.

14. Utilisation selon la revendication 13 **caractérisée en ce qu'**elle comprend des brûleurs oxy-gaz, oxy-fuel ou oxy-carbone.

## Patentansprüche

1. Verfahren zum Schmelzen durch Erdgas-Sauerstoff- oder Sauerstoff-Brennstoff- oder Sauerstoff-Kohlenstoff-Brenner von gebrauchten Batterien vom Typ Alkali, Zink-Kohle oder Zink-Luft oder Akkumulatoren der Typen NiCd oder NiMH oder Black Mass, **dadurch gekennzeichnet, dass** die gebrauchten Batterien, Akkumulatoren oder die Black Mass in einen Schmelzreaktor (1) geladen werden, in dem zuvor ein Flüssigmetallbad (3) auf der Grundlage von Eisen und, über dem Bad, eine Schlackeschicht (5) festgelegt wurde, und dadurch, dass diese Schlackeschicht als Stopfen, um den direkten Kontakt der Batterien oder Akkumulatoren mit dem Flüssigmetall des Bads (3) zu vermeiden, und als thermischer Übertragungsvektor sowie als Medium zur Reduktion der Metalloxide, die in den Batterien und Akkumulatoren und der Black Mass enthalten sind, verwendet wird.

2. Verfahren nach Anspruch 1, **dadurch gekennzeichnet, dass** ein Metallabsatz (3) erzeugt wird, indem Teile aus Guss oder aus Alteisen oder aus Eisenlegierung vom Typ hochgekohltes Ferromangan FeMnC geschmolzen werden.

3. Verfahren nach einem der Ansprüche 1 oder 2, **dadurch gekennzeichnet, dass** über dem Absatz (3) eine Schlackeschicht (5) mit einer Dicke von mindestens 15 cm, vorzugsweise im Bereich von 20 bis 30 cm, mit den Hauptbestandteilen CaO-SiO2-Al2O3 erzeugt wird.

4. Verfahren nach einem der Ansprüche 1 bis 3, **dadurch gekennzeichnet, dass** die Batterien, die Black Mass oder die Akkumulatoren in die Schlackeschicht geladen werden.

5. Verfahren nach Anspruch 4, **dadurch gekennzeichnet, dass** die flüchtigen Bestandteile wie z. B. Wasser oder die Kunststoffe oder die Pappkartons oder die Teere oder die Metallsälze und das Zn der Batterien oder Akkumulatoren in der Schlackeschicht vergast werden, und seine Schaumbildung verstärken, wodurch die Wirksamkeit der thermischen Übertragung der Flamme an das Bad verbessert wird.

6. Verfahren nach Anspruch 4, **dadurch gekennzeichnet, dass** die Schmelzreduktion der Bestandteile Fe, Mn, Ni, Co und Zn in der Schlackeschicht stattfindet.

7. Verfahren nach einem der Ansprüche 1 bis 6, **dadurch gekennzeichnet, dass** um das Schmelzen der Batterien, der Black Mass oder der Akkumulatoren im Schmelzreaktor sicherzustellen, mit der Ladung ein zusätzlicher Eintrag von Sauerstoff erfolgt, so dass eine Temperatur des Metall-Schlackeschicht-Bads im Bereich von 1400 °C festgesetzt und beibehalten wird.

8. Verfahren nach einem der Ansprüche 1 bis 7, **dadurch gekennzeichnet, dass** die Einheit, gebildet aus dem Metallbad (3) und der Schlackeschicht (5) durch Drehung des Behälters des Reaktors oder durch Gasinjektion gerührt wird.

9. Verfahren nach einem der Ansprüche 6 bis 8, **dadurch gekennzeichnet, dass** der Eintrag von zusätzlichem Kohlenstoff in Form von Kohle oder Koks oder Rückgewinnungskohlenstoff 10 bis 20 % des Ladedurchsatzes von Batterien, Black Mass oder Akkumulatoren darstellt.

10. Verfahren nach einem der Ansprüche 1 bis 9, **dadurch gekennzeichnet, dass** es vorbestimmte Zeiträume des Schlacke- und Flüssigmetallabstichs umfasst, und dadurch, dass das Laden der Batterien, der Black Mass oder Akkumulatoren halbkontinuierlich zwischen den Abstichzeiträumen erfolgt.

11. Verwendung einer Schmelzanlage für die Durchführung des Verfahrens nach einem der Ansprüche 1 bis 10, **dadurch gekennzeichnet, dass** die Anlage einen Schmelzreaktor 1 umfasst, umfassend ein Flüssigmetallbad (3) und über dem Bad eine Schlackeschicht (5), und ein System zur Behandlung der Gase, die im Reaktor beim Schmelzen erzeugt werden, das, in Reihe montiert, eine Nachbrennkammer (30) der Gase, eine Vorrichtung (35) zum Abkühlen der Gase und einen Gewebefilter (38) umfasst.

12. Verwendung nach Anspruch 11, **dadurch gekennzeichnet, dass** der Reaktor einen feuerfesten Behälter (15) umfasst, der mit einer Vorrichtung (17) zum Versetzen des Behälters in Drehung um seine Längsachse versehen ist, und der um eine horizontale Achse (26) zwischen einer vorteilhafterweise geneigten Schmelzposition und Abstichpositionen des flüssigen Metalls und der Schlacke schwenken kann.

13. Verwendung nach Anspruch 12, **dadurch gekennzeichnet, dass** die Anlage eine Abzugshaube (22) zum Austritt der Gase (in 24) und eine Injektions-Brennvorrichtung (7) und eine Laderinne (11) umfasst, die die Abzugshaube queren.

14. Verwendung nach Anspruch 13, **dadurch gekennzeichnet, dass** sie Erdgas-Sauerstoff-, Sauerstoff-Brennstoff oder Sauerstoff-Kohlenstoff-Brenner umfasst.

## Claims

1. A method for melting used batteries of alkaline, saline or zinc-air type or accumulators of NiCd or NiMH type or black-mass via oxy-gas or oxy-fuel or oxy-carbon burner, **characterized in that** the used batteries, accumulators or black-mass are fed into a melt reactor (1) in which a bath of iron-based liquid metal (3) has previously been formed and, above the bath, a slag layer (5), and **in that** this slag layer is used as buffer to prevent direct contact of the batteries or accumulators with the liquid metal of the bath (3) and as heat transfer vector and as reductive medium for the metal oxides contained in the batteries and accumulators and black-mass.

2. The method according to claim 1, **characterized in that** a liquid metal heel (3) is formed by melting parts in cast iron, scrap or ferro-alloy of high carbon ferro-manganese type FeMnC.

3. The method according to one of claims 1 or 2 **characterized in that**, above the liquid heel (3), a slag layer (5) is formed having a thickness of at least 15 cm, preferably of about 20 to 30 cm, and having CaO-SiO₂-Al₂O₃ as main constituents.

4. The method according to one of claims 1 to 3, **characterized in that** the batteries, black-mass or accumulators are fed into the slag layer.

5. The method according to claim 4, **characterized in that** the volatile constituents such as water or plastics or paper-paperboard or tars or metal salts and Zn, from the batteries or accumulators are gasified in the slag layer and reinforce foaming thereof improving the efficacy of heat transfer from the flame to the bath.

6. The method according to claim 4, **characterized in that** the reductive melting of the constituents Fe, Mn, Ni, Co and Zn takes place in the slag layer.

7. The method according to one of claims 1 to 6 **characterized in that**, to ensure melting of the batteries, black-mass or accumulators in the melt reactor, an additional supply of oxygen is provided together with the feed to set up and maintain a temperature of the metal bath-slag layer of about 1400 °C.

8. The method according to one of claims 1 to 7, **characterized in that** the assembly formed by the metal bath (3) and the slag layer (5) is mixed by rotating the reactor vessel or via injection of gas.

9. The method according to one of claims 6 to 8, **characterized in that** the additional supply of carbon in the form of coal or coke or recovered carbon represents 10 to 20 % of the feed flow of batteries, black-mass or accumulators.

10. The method according to one of claims 1 to 9, **characterized in that** it comprises predetermined flow periods of slag and liquid metal, and **in that** the feeding of batteries, black-mass or accumulators is conducted in semi-continuous manner between the flow periods.

11. Use of a melting facility to implement the method according to one of claims 1 to 10, **characterized in that** the facility comprises a melt reactor (1) comprising a liquid metal bath (3) and above the bath a slag layer (5), and a system for treating the gases produced in the reactor throughout melting, which comprises mounted in series a postcombustion chamber (30) of the gases, a device (35) for cooling the gases and a bag filter (38).

12. The use according to claim 11, **characterized in that** the reactor comprises a vessel with refractories (15) provided with a device (17) for driving the vessel in rotation around its longitudinal axis and which is able to pivot about a horizontal axis (26) between an advantageously tilted position for melting and positions for flowing of the liquid metal and slag.

13. The use according to claim 12, **characterized in that** the facility comprises a hood (22) to extract gases (at 24) and an injector-burner device (7) and a feed chute (11) passing through the hood.

14. The use according to claim 13, **characterized in that** it comprises oxy-gas, oxy-fuel or oxy-carbon burners.
